# EUROPÄISCHE PATENTSCHRIFT

(11) **EP 0 830 536 B1**
(45) Veröffentlichungstag und Bekanntmachung des Hinweises auf die Patenterteilung: **31.10.2001**
(21) Anmeldenummer: 96924775.8
(22) Anmeldetag: 26.07.1996
(51) Int. Cl.: F16K 47/02, F02M 69/54, F02M 37/00, G05D 16/02, G05D 16/06, F16K 7/12

(54) **DRUCKREGELVENTIL**
PRESSURE REGULATING VALVE
SOUPAPE DE REGULATION DE LA PRESSION

(30) Priorität: 22.12.1995 DE 19548167
(43) Veröffentlichungstag der Anmeldung: 25.03.1998
(73) Patentinhaber: ROBERT BOSCH GMBH, 70442 Stuttgart (DE)
(72) Erfinder: BUESER, Wolfgang, D-71691 Freiberg (DE)
(86) Internationale Anmeldenummer: DE9601394
(87) Internationale Veröffentlichungsnummer: WO9723741

(56) Entgegenhaltungen:
- WO-A-91/12450
- GB-A- 2 173 883
- US-A- 4 625 695
- US-A- 5 220 941
- US-A- 5 429 094
- PATENT ABSTRACTS OF JAPAN vol. 10, no. 349 (M-538), 26.November 1986 & JP 61 149567 A (NIPPON DENSO CO LTD), 8.Juli 1986,

## Beschreibung

### Stand der Technik

Die Erfindung geht aus von einem Druckregelventil nach der Gattung des Hauptanspruchs.

Zum Regeln des Drucks in einer Kraftstoffversorgungsanlage einer Brennkraftmaschine wird üblicherweise ein Druckregelventil verwendet. Das Druckregelventil befindet sich auf der Druckseite der Kraftstoffpumpe. Ein Teil des von der Kraftstoffpumpe geförderten Kraftstoffs wird über Einspritzventile der Brennkraftmaschine zugeführt. Bei vielen Brennkraftmaschinen ist je Zylinder je ein Einspritzventil vorgesehen. Gefordert wird, daß die Einspritzventile zu jedem Augenblick die genau richtige Kraftstoffmenge einspritzen, wobei die zulässige Streuung zwischen den Einspritzventilen extrem klein ist. Die von der Brennkraftmaschine nicht benötigte überschüssige Menge des Kraftstoffs wird über das Druckregelventil zum Kraftstoffvorratsbehälter zurückgeleitet. Dabei regelt das Druckregelventil den Druck auf der Druckseite der Kraftstoffpumpe. Bei verschiedenen Kraftfahrzeugen werden in der vom Druckregelventil zum Kraftstoffvorratsbehälter führenden Rückleitung den Rücklaufdruck beeinflussende Komponenten eingesetzt. Bei den Komponenten kann es sich beispielsweise um eine Strahlpumpe und/oder ein Steuerventil handeln.

Um ein Kraftfahrzeug mit einer Brennkraftmaschine so leise wie möglich zu machen, ist man bestrebt, die vom Druckregelventil herrührenden Geräusche zu minimieren, was in der Vergangenheit mit vertretbarem Aufwand nicht gelang. Insbesondere haben in der Rückleitung vorhandene, den Rücklaufdruck beeinflussende Komponenten einen erheblichen negativen Einfluß auf das Geräuschverhalten des Druckregelventils. Ein weiterer Nachteil bekannter Druckregelventile ist, daß im Kraftstoff Schwingungen entstehen, die sich bei den Einspritzventilen negativ auf eine gleichmäßige Verteilung des Kraftstoffs auswirken.

Um das Geräuschverhalten des Druckregelventils zu verbessern und um störende Einflüsse von Schwingungen auf die Kraftstoffzumessung der Einspritzventile zu vermeiden, wurden eine Vielzahl von Varianten verschiedener Druckregelventile erprobt. Im Verlauf der Untersuchungen wurde bei verschiedenen Druckregelventilen die Länge des Dichtspalts zwischen dem Schließkörper des Druckregelventils und dem Ventilsitz variiert, ohne daß jedoch damit das negative Geräuschverhalten des Druckregelventils beseitigt werden konnte. In einer weiteren Meßreihe wurde beispielsweise der Durchmesser der sich an den Dichtspalt anschließenden Anschlußöffnung variiert. Auch damit konnte keine zufriedenstellende Verbesserung des Geräuschverhaltens erreicht werden. Durch Vergrößern des Durchmessers der Anschlußöffnung konnten zwar von hochturbulenten Strömungen herrührende Geräusche etwas reduziert werden, aber dafür waren die Rückwirkungen aus der Rückleitung über das Druckregelventil zurück auf die Druckseite so stark, daß klar war, daß damit keine zufriedenstellende Lösung erreichbar ist. Insbesondere bei schwankenden Durchflußstömen und wenn in der Rückleitung die den Druck beeinflussenden Komponenten (z. B. Strahlpumpen) vorhanden waren, dann konnte, um die Rückwirkungen auf die Druckseite des Druckregelventils in Grenzen zu halten, der Durchmesser der Anschlußöffnung nicht so groß sein, daß die von den hochturbulenten Strömungen herrührenden Geräusche hätten vermieden werden können. In einer weiteren Versuchsreihe wurde der Durchflußstrom des Kraftstoffs durch eine Drossel hinter dem Dichtspalt gedrosselt. Allerdings mußte, um eine merkbare Reduzierung des Geräusches zu erreichen, die Drossel so klein gewählt werden, daß das Druckregelventil eine Drosselcharakteristik erhielt und zum Regeln eines Drucks nicht mehr geeignet war. Deshalb war klar, daß der Einbau einer Drossel hinter dem Dichtspalt zwecks Geräuschreduzierung nicht in Frage kommen konnte. Zusätzlich wurden auch Druckregelventile untersucht, bei denen der Schließkörper des Druckregelventils mit einem Reibelement versehen ist, das beim Öffnen und Schließen des Dichtspalts für eine Reibung zwischen dem Ventilgehäuse und dem Schließkörper sorgt. Mit diesem Druckregelventil konnte das Geräuschverhalten merkbar verbessert werden, aber das Regelverhalten dieser Ausführung ist sehr unzureichend und mit relativ großer Hysterese behaftet. Zudem ist der Aufwand zur Herstellung dieses Druckregelventils mit dem Reibelement mit sehr hohem Aufwand verbunden und ist deshalb keine befriedigende Möglichkeit zur Lösung des Geräuschproblems.

In der US 5,220,941 wird ein Druckregler beschrieben mit einer flexiblen Membran, die eine erste und eine zweite Kammer in einem Gehäuse bildet und eine Ventilkugel in der ersten Kammer in eine Öffnungs- und eine Schließstellung bewegt, um den Druck des Kraftstoffs zu regeln, der aus der ersten Kammer durch einen Auslaß abgegeben wird. Ein von der Membran getragener Käfig wirkt mit einem Trägerteil bzw. einer Scheibe zusammen, die an der Ventilkugel befestigt ist, um eine Totgangverbindung zwischen der Membran und der Ventilkugel zu bilden. Diese Totgangverbindung erlaubt eine axiale, radiale und schwenkbare Bewegung der Membran relativ zu der Ventilkugel innerhalb vorgegebener Grenzen, während die Ventilkugel in Anlage an ihrem Ventilsitz bleibt. Mit dem gezeigten, aufwendigen Druckregler soll eine verbesserte Regelung des Ausgangsdrucks erreicht werden.

### Vorteile der Erfindung

Das erfindungsgemäße Druckregelventil mit den kennzeichnenden Merkmalen des Hauptanspruchs hat demgegenüber den Vorteil, daß die vom Druckregelventil ausgehenden Geräusche stark reduziert sind und daß der Herstellungsaufwand des Druckregelventils gering ist. Es werden auch Rückwirkungen aus der Rückleitung über das Druckregelventil zurück auf den Druck auf der Druckseite vorteilhafterweise weitgehendst vermieden. Mit dem erfindungsgemäßen Druckregelventil ergibt sich bei den Einspritzventilen auf vorteilhafte Weise eine genaue, ungestörte Kraftstoffzumessung und eine gleichmäßige Kraftstoffverteilung zwischen den Einspritzventilen.

Durch die in den Unteransprüchen aufgeführten Maßnahmen sind vorteilhafte Weiterbildungen und Verbesserungen des im Hauptanspruch angegebenen Druckregelventils möglich.

Wird das Druckregelventil gemäß den Merkmalen des Anspruchs 1 ausgeführt, so ist sichergestellt, daß das Geräuschverhalten deutlich besser ist als bei einem bekannten Druckregelventil. Wird das Druckregelventil gemäß den einschränkenden Maßnahmen eines oder mehrerer abhängiger Ansprüche hergestellt, so kann das Geräuschverhalten insgesamt weiter verbessert werden. Übliche Durchflußstöme bei einem Druckregelventil für eine Kraftstoffversorgungsanlage einer Brennkraftmaschine befinden sich im Bereich von 10 bis 180 Liter je Stunde. Bei dem erfindungsgemäßen Druckregelventil ergibt sich die Geräuschreduzierung insbesondere im Bereich dieser Durchflußstöme.

### Zeichnung

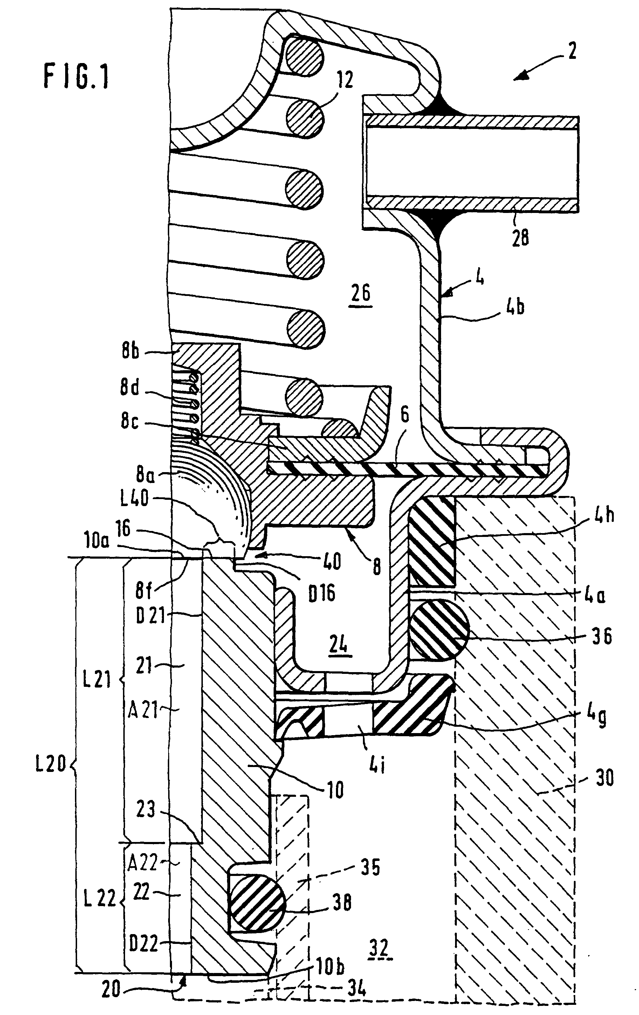

Ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 bis 3 Einzelheiten unterschiedlicher Ausführungsbeispiele.

### Beschreibung der Ausführungsbeispiele

Das erfindungsgemäße Druckregelventil kann vorzugsweise bei Brennkraftmaschinen verwendet werden, bei denen in der Kraftstoffversorgungsanlage ein Druck des Kraftstoffs geregelt werden soll.

Die **Figur 1** zeigt bei einem ersten Ausführungsbeispiel einen Halbschnitt entlang einer Symmetrieachse durch ein für die Beschreibung bevorzugt ausgewähltes, beispielhaft ausgeführtes, besonders vorteilhaftes Druckregelventil 2.

Bei dem beispielhaft ausgewählten Druckregelventil 2 handelt es sich um ein im wesentlichen rotationssymmetrisches Gebilde. Um bei nicht zu großem Platzbedarf die Einzelheiten möglichst groß darstellen zu können, ist die für die Zeichnung gewählte Schnittebene durch das Druckregelventil 2 nur auf einer Seite der Symmetrieachse dargestellt.

Das Druckregelventil 2 umfaßt ein Ventilgehäuse 4, eine Membran 6, einen Schließkörper 8, einen Anschlußstutzen 10 und eine Schließfeder 12. Das Ventilgehäuse 4 ist zusammengesetzt aus einem Gehäuseunterteil 4a und einem Gehäuseoberteil 4b. Die Membran 6 ist zwischen dem Gehäuseunterteil 4a und dem Gehäuseoberteil 4b entlang ihres Umfangs eingespannt.

Der Schließkörper 8 umfaßt beispielsweise eine abgeflachte Kugel 8a, ein Halteelement 8b, einen Federteller 8c und eine Feder 8d. Die Membran 6 hat eine mittige Aussparung und ist am Umfang dieser Aussparung im Schließkörper 8 zwischen dem Halteelement 8b und dem Federteller 8c eingespannt. An der Kugel 8a gibt es eine ebene Fläche 8f.

Der Anschlußstutzen 10 hat eine dem Schließkörper 8 zugewandte erste Stirnseite 10a, an der sich ein Ventilsitz 16 befindet, und eine dem Schließkörper 8 abgewandte zweite Stirnseite 10b. Durch den Anschlußstutzen 10 verläuft eine Anschlußöffnung 20. Die Anschlußöffnung 20 führt von der ersten Stirnseite 10a zur zweiten Stirnseite 10b.

Die Anschlußöffnung 20 unterteilt sich in einen ersten Abschnitt 21 und in einen zweiten Abschnitt 22. Der erste Abschnitt 21 hat eine Länge L21, und der zweite Abschnitt 22 besitzt eine Länge L22. Der erste Abschnitt 21 besitzt einen Durchmesser D21, und der zweite Abschnitt 22 hat einen Durchmesser D22. Von den beiden Durchmessern D21 und D22 ist der Durchmesser D21 des ersten Abschnitts 21 der größere Durchmesser und der Durchmesser D22 des zweiten Abschnitts 22 ist der kleinere Durchmesser. Zwischen den beiden Abschnitten 21 und 22 gibt es eine Stufe 23, die auch Rundungen aufweisen oder konisch verlaufend ausgebildet sein kann. Die Länge L21 und die Länge L22 ergeben in Reihe zusammen eine Gesamtlänge L20. Zu dem größeren Durchmesser D21 gehört eine größere Querschnittsfläche A21. Zu dem kleineren Durchmesser D22 gehört eine kleinere Querschnittsfläche A22. Durchmesser und Querschnittsfläche stehen gemäß bekannter geometrischer Rechenregeln in fester Beziehung zueinander.

Die Membran 6 trennt einen Kraftstoffraum 24 von einer Ventilkammer 26. Die Ventilkammer 26 ist über einen Anschluß 28 über eine nicht dargestellte Leitung beispielsweise mit einem nicht dargestellten Saugrohr der Brennkraftmaschine verbunden.

Das Druckregelventil 2 ist in einen Kraftstoffverteiler 30 eingebaut. Der Kraftstoffverteiler 30 ist der besseren Übersichtlichkeit wegen gestrichelt dargestellt. Im Kraftstoffverteiler 30 gibt es eine als eine Druckleitung 32 dienende Bohrung. Ein Hülsenansatz 35 in der Bohrung im Kraftstoffverteiler 30 bildet einen Anfang einer Rückleitung 34. Eine nicht dargestellte elektrisch angetriebene Kraftstoffpumpe fördert Kraftstoff aus einem Kraftstoffvorratsbehälter in die Druckleitung 32. Von der Brennkraftmaschine nicht benötigter Kraftstoff strömt von der Druckleitung 32 durch das Druckregelventil 2 zur Rückleitung 34 und von dort zu dem nicht dargestellten Kraftstoffvorratsbehälter.

Im Verlauf der Rückleitung 34, vorzugsweise im Bereich des Kraftstoffvorratsbehälters, können den Rücklaufdruck des Kraftstoffs in der Rückleitung 34 beeinflussende Komponenten, beispielsweise eine Strahlpumpe, bzw. mehrere Strahlpumpen und/oder ein Ventil, vorgesehen sein. Die Kraftstoffpumpe fördert zwar eine relativ konstante Kraftstoffmenge, da aber die von der Brennkraftmaschine abgenommene Kraftstoffmenge erheblich schwanken kann, schwankt der durch das Druckregelventil 2 strömende Durchflußstrom erheblich. Der durch das Druckregelventil 2 strömende Kraftstoff schwankt beispielsweise zwischen 10 und 180 Liter je Stunde. Das erfindungsgemäß ausgeführte Druckregelventil 2 ist dafür geeignet, den Druck des Kraftstoffs in der Druckleitung 32 auf einem konstanten Wert zu halten, fast unabhängig davon, wie groß der durch das Druckregelventil 2 strömende Durchflußstrom ist. Damit der Druck in der Druckleitung 32 konstant bleibt, ist es wichtig, daß durch das Druckregelventil 2 auch bei großem Durchflußstrom keine nennenswerte Drosselung des Kraftstoffs hervorgerufen wird. Das erfindungsgemäß ausgeführte Druckregelventil 2 ist bevorzugt so ausgebildet, daß bei einem Durchflußstrom bis über 180 Liter je Stunde keine unzulässige Drosselung des Kraftstoffs stattfindet.

Am Gehäuseunterteil 4a des Ventilgehäuses 4 ist ein den Einbau des Druckregelventils 2 in den Kraftstoffverteiler 30 erleichternder Ring 4g und ein Ring 4h vorgesehen. Eine Dichtung 36 zwischen den beiden Ringen 4g, 4h dichtet die Druckleitung 32 im Kraftstoffverteiler 30 nach außen hin ab. Am Außenumfang des Anschlußstutzens 10 ist ein Einstich vorgesehen. Eine Dichtung 38 in dem Einstich trennt die Rückleitung 34 gegenüber der Druckleitung 32.

Die Druckleitung 32 ist über eine durch den Ring 4g und durch das Gehäuseunterteil 4a führenden Durchlaß 4i mit dem Kraftstoffraum 24 verbunden. Die Kraft der Schließfeder 12 und die hydraulisch wirksamen Druckflächen des Schließkörpers 8 und der Membran 6 sind so aufeinander abgestimmt, daß über den Kraftstoffraum 24 in der Druckleitung 32 der gewünschte Druck herrscht.

Der Ventilsitz 16 hat einen Außendurchmesser D16. Der Ventilsitz 16 erstreckt sich an der Stirnseite 10a als Kreisringfläche um den ersten Abschnitt 21 der Anschlußöffnung 20 zwischen dem Durchmesser D21 und dem Außendurchmesser D16. Abhängig hauptsächlich vom Druck im Kraftstoffraum 24 liegt die Fläche 8f des Schließkörpers 8 am Ventilsitz 16 auf oder der Schließkörper 8 hebt mehr oder weniger etwas vom Anschlußstutzen 10 ab. Je nach Höhe des Drucks im Kraftstoffraum 24 gibt es einen mehr oder weniger hohen Dichtspalt 40 zwischen dem Ventilsitz 16 am Anschlußstutzen 10 und der Fläche 8f am Schließkörper 8. Der Dichtspalt 40 erstreckt sich konzentrisch um die Anschlußöffnung 20. Der Dichtspalt 40 beginnt beim Außendurchmesser D16 und endet am Durchmesser D21. Zwischen dem Außendurchmesser D16 und dem Durchmesser D21 hat der Dichtspalt 40 eine wirksame Dichtspaltlänge L40.

Zur Geräuschminderung beim Druckregelventil 2 sind verschiedene Abmessungen des Druckregelventils 2 in einem bestimmten Verhältnis zueinander auszuführen: Die größere Querschnittsfläche A21 ist 1,65 mal bis 3,33 mal so groß wie die kleinere Querschnittsfläche A22. Mit anderen Worten, die kleinere Querschnittsfläche A22 verhält sich zu der größeren Querschnittsfläche A21 wie 1 zu 1,65 bis 1 zu 3,33. Und die Länge L22 des zweiten Abschnitts 22 kann bis zu 5,83 mal so groß wie die wirksame Dichtspaltlänge L40 ausgeführt werden. Mit anderen Worten, die Dichtspaltlänge L40 ist mindestens so lang auszubilden, daß die Länge L22 des zweiten Abschnitts 22 höchstens 5,83 mal so groß wie die Dichtspaltlänge L40 ist.
D. h., A22 : A21 = 1 : 1,65 bis 1 : 3,33
und L40 : L22 = 1 : < 5,83 bis 1 : 5,83.

Haben die beiden Abschnitte 21 und 22 der Anschlußöffnung 20 kreisrunde Querschnitte, dann errechnen sich aus den angegebenen Werten für das Verhältnis der Querschnittsflächen A21 und A22 zueinander die Werte der Durchmesser zueinander wie folgt: Der größere Durchmesser D21 ist 1,29 mal bis 1,72 mal so groß wie der kleinere Durchmesser D22. Mit anderen Worten, der kleinere Durchmesser D22 verhält sich zu dem größeren Durchmesser D21 wie 1 zu 1,29 bis 1 zu 1,82.
D. h., D22 : D21 = 1 : 1,29 bis 1 : 1,82.

Die angegebenen Werte der Durchmesser zueinander gelten für kreisrunde Querschnittsflächen. Die Querschnittsfläche A21 und/oder die Querschnittsfläche A22 kann beisielsweise auch oval sein. Bei von kreisrund abweichenden Querschnittsflächen ändern sich die entsprechenden Abmessungen, bei gleichem, oben genanntem Verhältnis der beiden Querschnittsflächen A21 und A22 zueinander.

Die obengenannten Verhältnisse zwischen den Querschnittsflächen bzw. den Durchmessern, sowie entsprechender Längen zueinander ergeben eine Verbesserung des Druckregelventils 2 gegenüber anderen Druckregelventilen. Je nach Anwendungsfall und je nach Kundenforderungen bezüglich des Geräuschverhaltens müssen die genannten Verhältnisse eingeengt werden. Weitere Angaben hierzu enthält die nachfolgende Beschreibung.

Um die genannten, der Erfindung entsprechenden Verhältnisse bei den Abmessungen zu erhalten, wird vorgeschlagen, das Druckregelventil 2 bevorzugt mit folgenden Abmessungen auszuführen: Der Durchmesser D21 des ersten Abschnitts 21 der Anschlußöffnung 20 soll zwischen 2,7 mm und 3,1 mm, der Durchmesser D22 des zweiten Abschnitts zwischen 1,7 mm und 2,1 mm, die Dichtspaltlänge L40 des Dichtspalts 40 mindestens 1,2 mm und die Länge L22 des zweiten Abschnitts 22 der Anschlußöffnung 20 zwischen 4,0 mm und 7,0 mm betragen. (Tausend mm sind ein Meter.)

Mit den angegebenen Werten ist das Druckregelventil 2 wesentlich leiser als bisher bekannte Druckregelventile, und gleichzeitig ist das Druckregelventil 2 für den bei üblichen Brennkraftmaschinen vorkommenden Durchflußstrom zwischen 10 und 180 Liter je Stunde bei einem geregelten Druckgefälle von beispielsweise 3 bar hervorragend geeignet. Das Druckgefälle kann auch einen anderen Wert aufweisen. Vorzugsweise beträgt das Druckgefälle zwischen 2,5 bar und 4,5 bar. Werden die angegeben Werte eingehalten, dann tritt auch keine unzulässige Drosselung des Durchflußstromes auf. Die angegebenen Grenzwerte sind als mögliche Werte eingeschlossen.

Es sei noch darauf hingewiesen, daß die wirksame Dichtspaltlänge L40 des Dichtspalts 40 nicht deutlich länger als 1,6 mm gewählt werden sollte, weil eine Vergrößerung der Dichtspaltlänge L40 über 1,6 mm hinaus keine nennenswerte Veränderung des Geräuschverhaltens bringt, aber eine Vergrößerung der Fläche des Ventilsitzes 16 und der Fläche 8f des Schließkörpers 8 und damit eine Vergrößerung des gesamten Druckregelventils 2 bedeutet. Deshalb wird vorgeschlagen, die wirksame Dichtspaltlänge L40 des Dichtspalts 40 zwischen 1,2 mm und vorzugsweise 1,6 mm zu wählen. Daraus ergibt sich, daß das Verhältnis der Dichtspaltlänge L40 zu der Länge L22 des zweiten Abschnitts 22 bevorzugt zwischen 1 zu 2,5 und 1 zu 5,83 liegen soll. Mit anderen Worten, die Länge L22 ist 2,50 mal bis 5,83 mal so lang wie die Dichtspaltlänge L40.
D. h. L40 : L22 = 1 : 2,50 bis 1 : 5,83.

Besonders zweckmäßig und für die Geräuschminimierung vorteilhaft ist es, die aus der Längen L21 plus der Länge L22 bestehende Gesamtlänge L20 im Verhältnis zur Länge L22 wie 2,0 zu 1 bis 5,5 zu 1 auszuführen. Mit anderen Worten, die Gesamtlänge L20 ist 2,0 mal bis 5,5 mal so lang wie die Länge L22.
D. h., L22 : L20 = 1 : 2,0 bis 1 : 5,5.
Bei der genannten Länge L22 von 4,0 mm bis 7,0 mm sollte also die Gesamtlänge L20 bevorzugt zwischen 14 mm und 22 mm ausgefüht werden.

Wird das Druckregelventil 2 so ausgeführt, daß die Abmessungen innerhalb der vorstehend angegebenen Grenzwerte liegen, dann erhält man eine wesentliche Verbesserung des Geräuschverhaltens des Druckregelventils 2 gegenüber Druckregelventilen deren Abmessungen außerhalb dieser Grenzwerte liegen. Mit den Abmessungen innerhalb dieser Grenzwerte muß keine unzulässige Drosselung des Durchflußstromes und keine unakzeptable Baugröße des Druckregelventils 2 in Kauf genommen werden. Auch der erforderliche Bauaufwand ist gering.

Werden die obengenannten Grenzwerte etwas eingeengt, so erhält man eine wesentliche zusätzliche Verbesserung des Druckregelventils 2, insbesondere bezüglich des Geräuschverhaltens. Die genannte wesentliche Verbesserung erhält man, wenn die Abmessungen des Druckregelventils 2 auf die folgenden Grenzwerte eingeengt werden. Der Durchmesser D21 des ersten Abschnitts zwischen 2,8 mm und 3,0 mm; der Durchmesser D22 des zweiten Abschnitts 22 zwischen 1,8 mm und 2,0 mm; die Dichtspaltlänge L40 des Dichtspalts 40 zwischen 1,3 mm und 1,5 mm; die Länge L22 des zweiten Abschnitts 22 zwischen 4,5 mm und 6,0 mm; die Gesamtlänge L20 zwischen 15 mm und 18 mm. Dies bedeutet folgende Verhältnise der Abmessungen:
A22 : A21 = 1 : 1,96 bis 1 : 2,78
D22 : D21 = 1 : 1,40 bis 1: 1,67
L40 : L22 = 1 : 3,00 bis 1 : 4,62
L22 : L20 = 1 : 2,50 bis 1 : 4,00.

Eine weitere Verbesserung der genannten Eigenschaften des Druckregelventils 2 ergibt sich, wenn man die angegebenen Maße wie nachfolgend angegeben weiter einschränkt und den Durchmesser D21 des ersten Abschnitts 21 im Bereich von ungefähr 2,9 mm ausführt, den Durchmesser D22 des zweiten Abschnitts 22 im Bereich von ungefähr 1,9 mm wählt, die Dichtspaltlänge L40 des Dichtspalts 40 in etwa 1,35 mm lang ausführt, die Länge L22 des zweiten Abschnitts 22 ca. 5,0 mm bis 5,5 mm lang wählt und das Druckregelventil 2 so ausführt, daß die Gesamtlänge L20 der beiden Abschnitte 21, 22 zusammen zwischen 16 mm und 17 mm lang ist. Vorgeschlagen wird, das Druckregelventil 2 bevorzugt mit den zuletzt benannten Abmessungen auszuführen, wobei übliche fertigungsbedingte Toleranzabweichungen der Abmessungen keine negativen Auswirkungen auf das Geräuschverhalten haben. Bei dieser bevorzugten, besonders zweckmäßigen, vorteilhaften Ausführungsform stehen die Abmessungen in folgendem Verhältnis zueinander:
A22 : A21 = 1 : 2,33
D22 : D21 = 1 : 1,53
L40 : L22 = 1 : 3,89
L22 : L20 = 1 : 3,14

Eine mindestens teilweise Verbesserung ergibt sich auch dann, wenn eines der angegeben Maße bzw. mehrere der angegebenen Maße auf die angegebene Art und Weise enger toleriert wird.

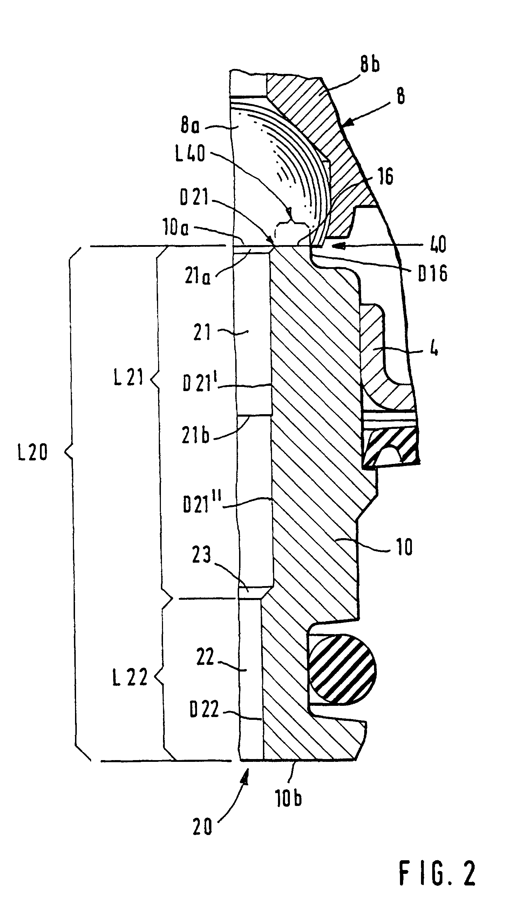

Die **Figur 2** zeigt ein weiteres besonders ausgewähltes, vorteilhaftes Ausführungsbeispiel, wobei der besseren Übersichtlichkeit wegen verschiedene Bereiche des Druckregelventils 2 nicht dargestellt sind.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Bei dem in der Figur 2 dargestellten Ausführungsbeispiel ist der erste Abschnitt 21 der Anschlußöffnung 20 mit einer Fase 21a versehen. Am Übergang zwischen der Fase 21a und dem Ventilsitz 16 endet der Dichtspalt 40. Dieser Übergang definiert den wirksamen Durchmesser D21 des ersten Abschnitts 21 der Anschlußöffnung 20. Im Anschluß an die Fase 21a hat der erste Abschnitt 21 einen Durchmesser D21', der etwas kleiner als der wirksame Durchmesser D21 ist. Um eine optimale Verbesserung des Geräuschverhaltens des Druckregelventils 2 zu erhalten, sollte die Fase nicht breiter als 0,2 mm sein. Dies bedeutet, aus Richtung der Stirnseite 10a betrachtet, daß sich der der Fase 21a anschließende Durchmesser D21' nicht über 0,4 mm kleiner als der Durchmesser D21 sein sollte.

Es ist manchmal schwierig, eine längere zylindrische Bohrung mit relativ kleinem Durchmesser exakt auszuführen. Deshalb ist bei dem in der Figur 2 dargestellten Ausführungsbeispiel ungefähr in der Mitte der Länge L21 des ersten Abschnitts 21 der Anschlußöffnung 20 eine Stufe 21b vorgesehen. An der Stufe 21b ändert sich der Durchmesser des ersten Abschnitts 21 etwas. Ausgehend vom Ventilsitz 16 betrachtet, schließt sich dem Durchmesser D21' an der Stufe 21b ein Durchmesser D21" an. Der Durchmesser D21" hinter der Stufe 21b ist um höchstens 0,1 mm kleiner als der Durchmesser D21' vor der Stufe 21b.

Die den Übergang zwischen den beiden Abschnitten 21 und 22 bestimmende Stufe 23 kann, wie in der Figur 1 dargestellt, in Form eines senkrecht zur Anschlußöffnung 20 verlaufenden Absatzes ausgeführt sein. Es ist aber auch möglich, wie bei dem in der Figur 2 dargestellten Ausführungsbeispiel gezeigt, die Stufe 23 konisch auszuführen. Die Konizität der Stufe 23 bestimmt sich vorzugsweise danach, welcher Winkel für die zur Herstellung der Anschlußöffnung 20 benötigte Bohrerspitze am zweckmäßigsten ist.

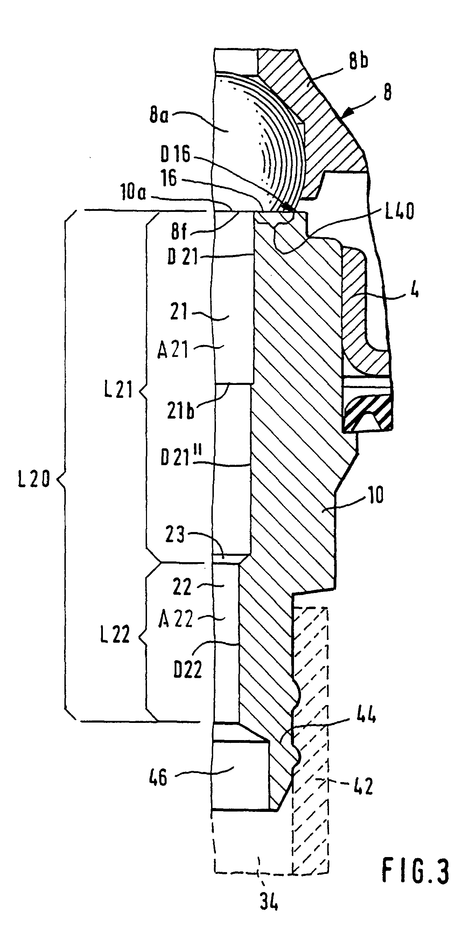

Die **Figur 3** zeigt ausschnittsweise ein weiteres ausgewähltes, besonders vorteilhaftes Ausführungsbeispiel.

Bei dem in der Figur 1 dargestellten Ausführungsbeispiel besteht der Kraftstoffverteiler 30 aus einem formstabilen Werkstoff, vorzugsweise Metall, und die Druckleitung 32 sowie die Rückleitung 34 sind in dem Kraftstoffverteiler 30 vorgesehen. Das Druckregelventil 2 wird mit dem Gehäuseunterteil 4a und dem Anschlußstutzen 10 in den Kraftstoffverteiler 30 gesteckt und wie bereits beschrieben abgedichtet. Im Unterschied dazu zeigt die Figur 3 ein Ausführungsbeispiel, bei dem die Rückleitung 34 in einer elastischen Schlauchleitung 42 verläuft. Die Schlauchleitung 42 ist der besseren Übersichtlichkeit wegen in der Figur 3 gestrichelt dargestellt. Zwecks zuverlässiger Verbindung zwischen der Schlauchleitung 42 und dem Anschlußstutzen 10 ist an dem Anschlußstutzen 10 eine Verlängerung 44 vorgesehen. Bei dem in der Figur 3 dargestellten Ausführungsbeispiel schließt sich, aus Richtung des Ventilsitzes 16 betrachtet, an den zweiten Abschnitt 22 ein weiterer Abschnitt 46 an. Der Durchmesser des weiteren Abschnitts 46 ist wesentlich größer als der Durchmesser D22 des zweiten Abschnitts 22. Der Durchmesser des weiteren Abschnitts 46 ist so groß, daß im Bereich des weiteren Abschnitts 46 praktisch keine Drosselung des Durchflußstromes stattfindet. Der Übergang zwischen dem zweiten Abschnitt 22 und dem weiteren Abschnitt 46 kann, wie in der Figur 3 dargestellt, über eine konische Stufe geschehen. Der Übergang kann aber auch über eine senkrecht zur Anschlußöffnung 20 verlaufende Stufe erfolgen.

Im Unterschied zu den in den Figuren 1 und 2 dargestellten Ausführungsbeispielen ist bei dem in der Figur 3 gezeigten Ausführungsbeispiel die Kugel 8a des Schließkörpers 8 relativ zum Außendurchmesser des Anschlußstutzens 10 etwas kleiner dimensioniert. Bei dem in der Figur 3 dargestellten Ausführungsbeispiel befindet sich der wirksame Außendurchmesser D16 am Außenumfang der Fläche 8f des Schließkörpers 8, dort wo die Fläche 8f die Kugelform der Kugel 8a schneidet. Der Dichtspalt 40 mit der Dichtspaltlänge L40 beginnt am Außendurchmesser D16 und endet am Durchmesser D21.

Bei dem in der Figur 3 dargestellten Ausführungsbeispiel wird auf die in der Figur 2 gezeigte Fase 21a verzichtet. In der Figur 3 hat der erste Abschnitt 21 zwischen der Stirnseite 10a und der Stufe 21b durchgehend den wirksamen zylindrischen Durchmesser D21. An der Stufe 21b kommt im Anschluß an den Durchmesser D21 der um höchstens 0,1 mm kleinere Durchmesser D21''.

Bei den dargestellten Ausführungsbeispielen umfaßt der Schließkörper 8 die am Anschlußstutzen 10 anliegende Kugel 8a. Es sei darauf hingewiesen, daß anstatt der Kugel 8a beispielsweise auch eine mit dem Schließkörper 8 direkt oder über eine in dem Halteelement 8b gelagerte Kugel verbundene Platte vorgesehen sein kann, die sich im geschlossenen Zustand am Ventilsitz 16 des Anschlußstutzen 10 abstützt. Eine weitere Ausführungsform des Druckregelventils 2 kann beispielsweise auch so aussehen, daß bei der Kugel 8a auf die Fläche 8f verzichtet wird. Bei dieser abgewandelten Ausführungsform besitzt die an dem Anschlußstutzen 10 sich abstützende Kugel 8a keine Abflachung und dafür ist der Ventilsitz 16 am Anschlußstutzen 10 entsprechend angepaßt. D. h., der Ventilsitz 16 am Anschlußstutzen 10 ist beispielsweise kegelförmig oder kalottenförmig. Auch bei dieser Ausführungsform ergibt sich die beschriebene optimale Reduzierung des Geräuschverhaltens des Druckregelventils 2, wenn der Dichtspalt zwischen dem Schließkörper 8 und dem Anschlußstutzen 10 die anhand der dargestellten Ausführungsbeispiele beschriebene Länge besitzt und auch die sonstigen angegebenen Grenzwerte eingehalten werden.

## Patentansprüche

1. Druckregelventil, insbesondere für Kraftstoffversorgungsanlagen von Brennkraftmaschinen, mit einem Ventilgehäuse und mit einer in dem Ventilgehäuse eingespannten Membran, die in dem Ventilgehäuse einen Kraftstoffraum von einer Ventilkammer trennt, ferner mit einem Anschlußstutzen (10), mit einer in dem Anschlußstutzen vorgesehenen Anschlußöffnung (20) und mit einem an dem Anschlußstutzen vorgesehenen um die Anschlußöffnung verlaufenden Ventilsitz, sowie mit einem mit der Membran verbundenen Schließkörper (8), der von einer Schließkraft in Richtung gegen den Ventilsitz beaufschlagt ist, wobei zwischen dem Schließkörper und dem Anschlußstutzen ein den Kraftstoffraum von der Anschlußöffnung druckabhängig trennender umlaufender Dichtspalt (40) vorgesehen ist, wobei die Anschlußöffnung (20), ausgehend vom Ventilsitz (16), in einem ersten Abschnitt (21) eine größere Querschnittsfläche (A21) und in einem zweiten Abschnitt (22) eine kleinere Querschnittsfläche (A22) hat, **dadurch gekennzeichnet, daß** sich die kleinere Querschnittsfläche (A22) zu der größeren Querschnittsfläche (A21) verhält wie 1 zu 1,65 bis 1 zu 3,33 und der zweite Abschnitt (22) eine Länge (L22) hat, die bis zu 5,83 mal so groß wie eine wirksame Dichtspaltlänge (L40) des Dichtspalts (40) ist.

2. Druckregelventil nach Anspruch 1, **dadurch gekennzeichnet, daß** der ersten Abschnitt (21) einen Durchmesser (D21) hat, der 1,29 mal bis 1,82 mal so groß wie ein Durchmesser (D22) des zweiten Abschnitts (22) ist.

3. Druckregelventil nach Anspruch 2, **dadurch gekennzeichnet, daß** der Durchmesser (D21) des ersten Abschnitts (21) zwischen 2,7 mm und 3,1 mm ist.

4. Druckregelventil nach Anspruch 2, **dadurch gekennzeichnet, daß** der Durchmesser (D21) des ersten Abschnitts (21) zwischen 2,8 mm und 3,0 mm beträgt.

5. Druckregelventil nach Anspruch 2, **dadurch gekennzeichnet, daß** der Durchmesser (D21) des ersten Abschnitts (21) ca. 2,9 mm beträgt.

6. Druckregelventil nach einem der Ansprüche 2 bis 5, **dadurch gekennzeichnet, daß** der Durchmesser (D22) des zweiten Abschnitts (22) zwischen 1,7 mm und 2,1 mm ist.

7. Druckregelventil nach einem der Ansprüche 2 bis 5, **dadurch gekennzeichnet, daß** der Durchmesser (D22) des zweiten Abschnitts (22) zwischen 1,8 mm bis 2,0 mm beträgt.

8. Druckregelventil nach einem der Ansprüche 2 bis 5, **dadurch gekennzeichnet, daß** der Durchmesser (D22) des zweiten Abschnitts (22) ca. 1,9 mm beträgt.

9. Druckregelventil nach einem der vorhergehenden Ansprüche, **dadurch gekennzeichnet, daß** die Dichtspaltlänge (L40) des Dichtspalts (40) mindestens 1,2 mm ist.

10. Druckregelventil nach einem der Ansprüche 1 bis 8, **dadurch gekennzeichnet, daß** die Dichtspaltlänge (L40) zwischen 1,2 mm und 1,6 mm beträgt.

11. Druckregelventil nach einem der Ansprüche 1 bis 8, dadurch daß die Dichtspaltlänge (L40) 1,35 mm beträgt.

12. Druckregelventil nach einem der vorhergehenden Ansprüche, **dadurch gekennzeichnet, daß** die Länge (L22) des zweiten Abschnitts (22) zwischen 4,0 mm und 7,0 mm ist.

13. Druckregelventil nach einem der Ansprüche 1 bis 11, **dadurch gekennzeichnet, daß** die Länge (L22) des zweiten Abschnitts (22) zwischen 4,5 mm und 6,0 mm ist.

14. Druckregelventil nach einem der Ansprüche 1 bis 11, **dadurch gekennzeichnet, daß** die Länge (L22) des zweiten Abschnitts (22) 5,0 mm bis 5,5 mm ist.

15. Druckregelventil nach einem der vorhergehenden Ansprüche, **dadurch gekennzeichnet, daß** der erste Abschnitt (21) und der zweite Abschnitt (22) zusammen eine Gesamtlänge (L20) aufweisen, wobei die Gesamtlänge (L20) 2 mal bis 5,5 mal so lang wie der zweite Abschnitt (22) ist.

16. Druckregelventil nach Anspruch 15, **dadurch gekennzeichnet, daß** die Gesamtlänge (L20) des ersten Abschnitts (21) und des zweiten Abschnitts (22) zwischen 14 mm und 22 mm beträgt.

17. Druckregelventil nach Anspruch 15, **dadurch gekennzeichnet, daß** die Gesamtlänge (L20) des ersten Abschnitts (21) und des zweiten Abschnitts (22) zwischen 15 mm und 18 mm beträgt.

18. Druckregelventil nach Anspruch 17, **dadurch gekennzeichnet, daß** die Gesamtlänge (L20) des ersten Abschnitts (21) und des zweiten Abschnitts (22) zusammen 16 mm bis 17 mm beträgt.

## Claims

1. Pressure-regulating valve, in particular for fuel supply systems of internal combustion engines, having a valve housing and having a diaphragm which is fixed in the valve housing and separates a fuel space from a valve chamber in the valve housing, furthermore having a connecting branch (10), having a connecting opening (20) provided in the connecting branch and having a valve seat which is provided on the connecting branch and runs around the connecting opening, and also having a closing body (8) which is connected to the diaphragm and is acted upon by a closing force in the direction of the valve seat, a peripheral sealing gap (40) which separates the fuel space from the connecting opening as a function of pressure being provided between the closing body and the connecting branch, the connecting opening (20) having, starting from the valve seat (16), a larger cross-sectional surface (A21) in a first section (21) and a smaller cross-sectional surface (A22) in a second section (22), **characterized in that** the ratio of the smaller cross-sectional surface (A22) to the larger cross-sectional surface (A21) is 1 to 1.65 to 1 to 3.33, and the second section (22) has a length (L22) which is up to 5.83 times as large as an effective sealing-gap length (L40) of the sealing gap (40).

2. Pressure-regulating valve according to Claim 1, **characterized in that** the first section (21) has a diameter (D21) which is 1.29 times to 1.82 times as large as a diameter (D22) of the second section (22).

3. Pressure-regulating valve according to Claim 2, **characterized in that** the diameter (D21) of the first section (21) is between 2.7 mm and 3.1 mm.

4. Pressure-regulating valve according to Claim 2, **characterized in that** the diameter (D21) of the first section (21) is between 2.8 mm and 3.0 mm.

5. Pressure-regulating valve according to Claim 2, **characterized in that** the diameter (D21) of the first section (21) is approximately 2.9 mm.

6. Pressure-regulating valve according to one of Claims 2 to 5, **characterized in that** the diameter (D22) of the second section (22) is between 1.7 mm and 2.1 mm.

7. Pressure-regulating valve according to one of Claims 2 to 5, **characterized in that** the diameter (D22) of the second section (22) is between 1.8 mm and 2.0 mm.

8. Pressure-regulating valve according to one of Claims 2 to 5, **characterized in that** the diameter (D22) of the second section (22) is approximately 1.9 mm.

9. Pressure-regulating valve according to one of the preceding claims, **characterized in that** the sealing-gap length (L40) of the sealing gap (40) is at least 1.2 mm.

10. Pressure-regulating valve according to one of Claims 1 to 8, **characterized in that** the sealing-gap length (L40) is between 1.2 mm and 1.6 mm.

11. Pressure-regulating valve according to one of Claims 1 to 8, **characterized in that** the sealing-gap length (L40) is 1.35 mm.

12. Pressure-regulating valve according to one of the preceding claims, **characterized in that** the length (L22) of the second section (22) is between 4.0 mm and 7.0 mm.

13. Pressure-regulating valve according to one of Claims 1 to 11, **characterized in that** the length (L22) of the second section (22) is between 4.5 mm and 6.0 mm.

14. Pressure-regulating valve according to one of Claims 1 to 11, **characterized in that** the length (L22) of the second section (22) is 5.0 mm to 5.5 mm.

15. Pressure-regulating valve according to one of the preceding claims, **characterized in that** the first section (21) and the second section (22) together have an overall length (L20), the overall length (L20) being twice to 5.5 times as long as the second section (22).

16. Pressure-regulating valve according to Claim 15, **characterized in that** the overall length (L20) of the first section (21) and the second section (22) is between 14 mm and 22 mm.

17. Pressure-regulating valve according to Claim 15, **characterized in that** the overall length (L20) of the first section (21) and the second section (22) is between 15 mm and 18 mm.

18. Pressure-regulating valve according to Claim 17, **characterized in that** the overall length (L20) of the first section (21) and the second section (22) is in all 16 mm to 17 mm.

## Revendications

1. Soupape de régulation de pression, en particulier pour installations alimentant en carburant des moteurs à combustion interne, comportant :
• un boîtier de soupape dans lequel est tendue une membrane divisant le boîtier en une chambre de carburant et une chambre de soupape,
• une tubulure de raccordement (10) présentant un passage de raccordement (20) et comportant, entourant ce passage, un siège de soupape, ainsi qu'un corps de fermeture (8) relié à la membrane et soumis, en direction du siège de soupape, à une force de fermeture,
• entre le corps de fermeture et la tubulure de raccordement, une fente périphérique d'étanchéité (40) qui sépare, en fonction de la pression, la chambre de carburant et le passage de raccordement (20) qui, en partant du siège de soupape (16) présente, une première partie (21) avec une surface de section (A21) supérieure et une seconde partie (22) avec une surface de section (A22) inférieure,
**caractérisée en ce que**
la surface inférieure (A22) est, vis à vis de la surface supérieure de section (A21) dans un rapport compris entre 1 à 1,65 et 1 à 3,33, la seconde partie (22) ayant une longueur (L22) qui est jusqu'à 5,83 fois plus grande qu'une longueur efficace (L40) de la fente d'étanchéité (40).

2. Soupape de régulation selon la revendication 1,
**caractérisée en ce que**
la première partie (21) a un diamètre (D21) qui est de 1,29 à 1,82 fois plus grand que le diamètre (D22) de la seconde partie (22).

3. Soupape de régulation selon la revendication 2,
**caractérisée en ce que**
le diamètre (D21) de la première partie (21) est compris entre 2,7 et 3,1 mm.

4. Soupape de régulation selon la revendication 2,
**caractérisée en ce que**
le diamètre (D21) de la première partie (21) est compris entre 2,8 et 3,0 mm.

5. Soupape de régulation selon la revendication 2,
**caractérisée en ce que**
le diamètre (D21) de la première partie (21) est de 2,9 mm environ.

6. Soupape de régulation selon l'une quelconque des revendications 2 à 5,
**caractérisée en ce que**
le diamètre (D22) de la seconde partie (22) est compris entre 1,7 et 2,1 mm.

7. Soupape de régulation selon l'une quelconque des revendications 2 à 5,
**caractérisée en ce que**
le diamètre (D22) de la seconde partie (22) est compris entre 1,8 et 2,0 mm.

8. Soupape de régulation selon l'une quelconque des revendications 2 à 5,
**caractérisée en ce que**
le diamètre (D22) de la seconde partie (22) est d'environ 1,9 mm.

9. Soupape de régulation selon l'une quelconque des revendications précédentes,
**caractérisée en ce que**
la longueur (L40) de la fente d'étanchéité (40) est de 1,2 mm au moins.

10. Soupape de régulation selon l'une quelconque des revendications 1 à 8,
**caractérisée en ce que**
la longueur (L40) de la fente d'étanchéité (40) est comprise entre 1,2 et 1,6 mm.

11. Soupape de régulation selon l'une quelconque des revendications 1 à 8,
**caractérisée en ce que**
la longueur (L40) de la fente d'étanchéité (40) est de 1,35 mm.

12. Soupape de régulation selon l'une quelconque des revendications précédentes,
**caractérisée en ce que**
la longueur (L22) de la seconde partie (22) est comprise entre 4,0 et 7,0 mm.

13. Soupape de régulation selon l'une quelconque des revendications 1 à 11,
**caractérisée en ce que**
la longueur (L22) de la seconde partie (22) est comprise entre 4,5 et 6,0 mm.

14. Soupape de régulation selon l'une quelconque des revendications 1 à 11,
**caractérisée en ce que**
la longueur (L22) de la seconde partie (22) est de 5,0 à 5,5 mm.

15. Soupape de régulation selon l'une quelconque des revendications précédentes,
**caractérisée en ce que**
la première partie (21) et la seconde partie (22) présentent ensemble une longueur totale (L20) qui est de 2 à 5,5 fois celle de la seconde partie (22).

16. Soupape de régulation selon la revendication 15,
**caractérisée en ce que**
la longueur totale (L20) de l'ensemble de la première partie (21) et de la seconde partie (22) est comprise entre 14 et 22 mm.

17. Soupape de régulation selon la revendication 15,
**caractérisée en ce que**
la longueur totale (L20) de l'ensemble de la première partie (21) et de la seconde partie (22) est comprise entre 15 et 18 mm.

18. Soupape de régulation selon la revendication 17,
**caractérisée en ce que**
la longueur totale (L20) de l'ensemble de la première partie (21) et de la seconde partie (22) est de 16 à 17 mm.
